# EUROPEAN PATENT SPECIFICATION

(11) **EP 2 712 492 B1**
(45) Date of publication and mention of the grant of the patent: **21.02.2018**
(21) Application number: 13445003.0
(22) Date of filing: 26.09.2013
(51) Int. Cl.: A01B 61/04, A01B 63/16

(54) **Toolbracket for sowing coulter and tools for working the ground**
Geräteträger für Säschar und Werkzeuge für die Bodenbearbeitung
Support d'outil pour soc de semis et outils pour travailler le sol

(30) Priority: 27.09.2012 SE 1200580
(43) Date of publication of application: 02.04.2014
(73) Proprietor: Askling, Lars, 590 30 Borensberg (SE)
(72) Inventor: Askling, Lars, 590 30 Borensberg (SE)

(56) References cited:
- EP-A1- 1 974 596
- US-A- 3 450 074
- US-A- 4 860 672
- US-A- 5 331 907
- US-A- 6 142 085

## Description

At sowing as well as working of the soil before and after this the soil must often be worked and after sowing it may be time for instance to mill down of fertilizer, mechanical weed fighting between the sow rows, etcetera. The modern technique, (for instance EP 1731011) has made it possible to execute sowing as well as mechanical working of the ground before or after the sowing with a common basic machine that is provided with different tools. The conditions present can vary with type of ground, for instance a rocky ground, sand or clay, damp or dry, as well as of course the crop in question. In order to cope with these varying conditions it is however not always sufficient to change tools but these may also have to be controlled in varying ways in the soil. Each of US-A-5331907 and EP-A-1974596 discloses a device according to the preamble of claim 1. The object of the invention is to make it possible with a versatile control of tools at sowing and soil working.

The above object is solved with a device in accordance with claim 1.

Further developments of the invention are apparent from the subclaims, as well as from the following description of an embodiment of the invention shown in the enclosed drawings.

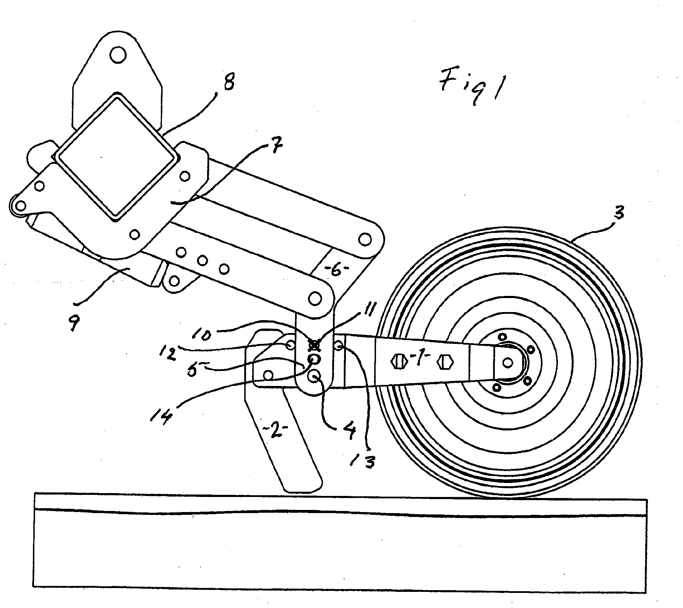

In the drawings Fig. 1 to 10 show fixed, floating and different stop positions and thereby obtained end positions, as well as fixed positions for one or several tools.

The device shown in the drawings includes an arm 1 that in its front end (in the working direction) has a tool 2 and in the rear end a depth controlling wheel 3 for contact with the ground is journalled, which is wide enough to rest on the ground surface on both sides of the track that is made by the tool. Between the wheel and the tool there is a bearing 4 that connects the arm with an extensions 5 of a link 6 in a articulated parallelogram that in turn with the link 7 opposite the link 6 is fastened to a square beam 8. The articulated parallelogram has a spring 9 that returns the parallelogram to the working position after a swivelling away at for instance springing away for rocks. Furthermore there is a pin 10 that can be inserted into different holes 11 - 14 int the arm 1. The square beam 8 that is common for a number of parallel tool suspension is via a number of ears with pivot bearings journalled for turning movements in the machine so that by pivoting the beam with one or several hydraulic cylinders it will assume different turning positions as well as the devices fastened to the same square beam.

The tool is positioned by means of the turning of the beam 8 that change the angle of parallel arms and with this the tool bracket angle (at a locking pin position) and or the function of the tool bracket depending of the placing of the pin (in the example a pin, can also be constituted by adjustable stops). The turning movement cooperates with a control wheel in order to depend on the placing of the pin to control the position or function of the tool. The pressure on the tool is mainly controlled by the height of the frame so that the larger or lesser part of the weight of the machine from the wheels of this is taken over by the tool or sowing coulter and the depth controlling wheel. Both pressure and depths can thus be controlled from the tractor.

The invented tool holder provide new functions which increase the use of the machine they are mounted on since it allows different ways to work with the tools. The split and articulated holder 1, 5, 6 can in the example be placed in five different main working positions by placing the pin in different holes. The five main functions are described below. The stops may even comprise two in several steps or stepless adjustable stops, that in a further development can be synchronously or individually remote controlled.

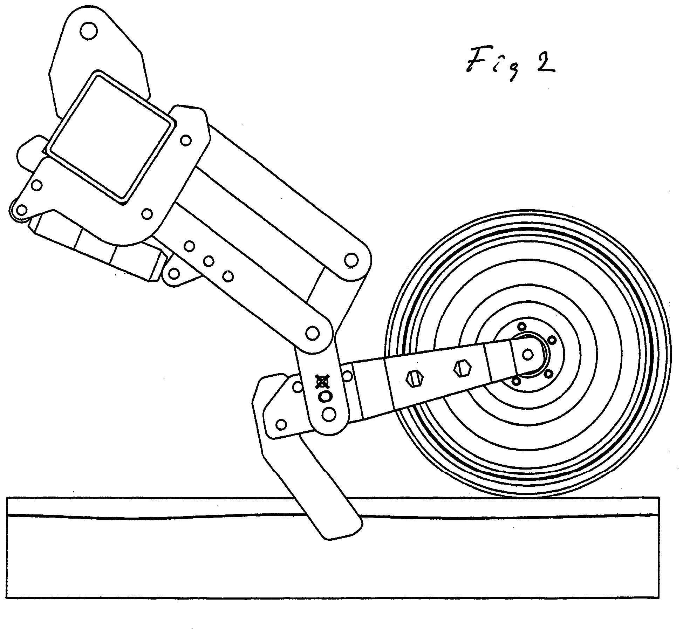

Locked position (Fig. 1 and Fig. 2): the pin is inserted into the hole 11 and through an underlaying hole in the extension 5.

The turning of the beam 8 change the depths geometrically. The angle of the beam 8 controls via the parallelogram the inclination of the arm 1, which in turn controls the level between the bottom edges of the wheel and tool respectively and when the wheel (control wheel) rolls on the ground surface (tool in relation to wheel and ground). The pushing down of the tool against and down into the ground is stopped by the wheel so that an essentially constant sow depth is obtained. The required pressure downwards on the tool is adjusted with the height of the frame.

The turning of the beam 8 change the depth geometrically. The angle of the beam 8 controls via the parallelogram and the locked connection in this position between the arm 6 and arm 1 the inclination of the arm 1. Since the control wheel rests on the ground surface the pattern of movement of the tool 2 will change so that the tool moves essentially upwards or downwards at turning of the beam 8.

Fig. 1 shows the position of the parallelogram with the wheel and tool at the same level on the ground and in Fig. 2 the inclination of the arm 1 has been changed with the beam 8 so that the tool extends a distance down into the soil while the depth control wheel 3 rests on the ground.

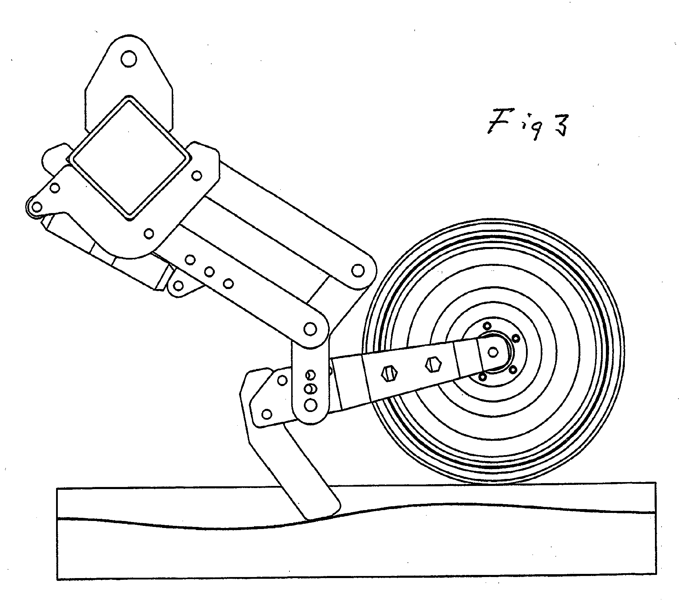

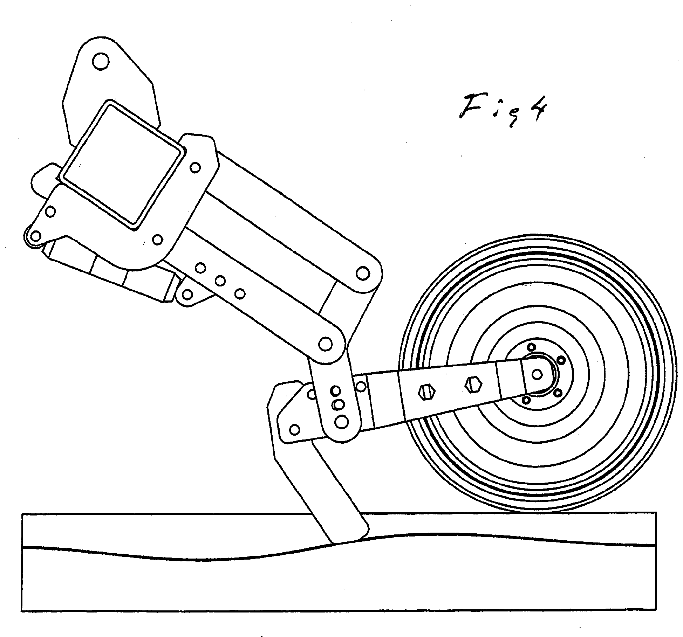

Entirely moveable position Fig. 3 and 4 (no pin at all).

Since the arm 1 with the wheel in its rear end can pivot freely the pressing down of the tool is not limited by the contact of the wheel with the ground but the tool is pushed down until the resistance from the ground is as large as the pressing force on the tool in direction downwards. The upper layer of the ground is harrowed and therefor more porous than the ground below and with a suitable pressure adjustment the tool, for instance a sowing coulter can be brought to follow the separating line (sow bottom) between the porous upper layer and the underlaying more compact bed. The turning of the beam now instead change the pressure of the tool downwards so that this can follow a sow bottom. Fig. 3 small pressure downwards, Fig. 4 high pressure downwards. The pressure can also be adjusted with the height of the frame. The wheel 3 in contact with the soil push down the soil loosened by the tool to the adjacent ground level, alternately the wide wheel may be exchanged for a pressure wheel that is narrow and falls down in the track made by the sowing coulter 2 so that the soil around the seeds is compacted.

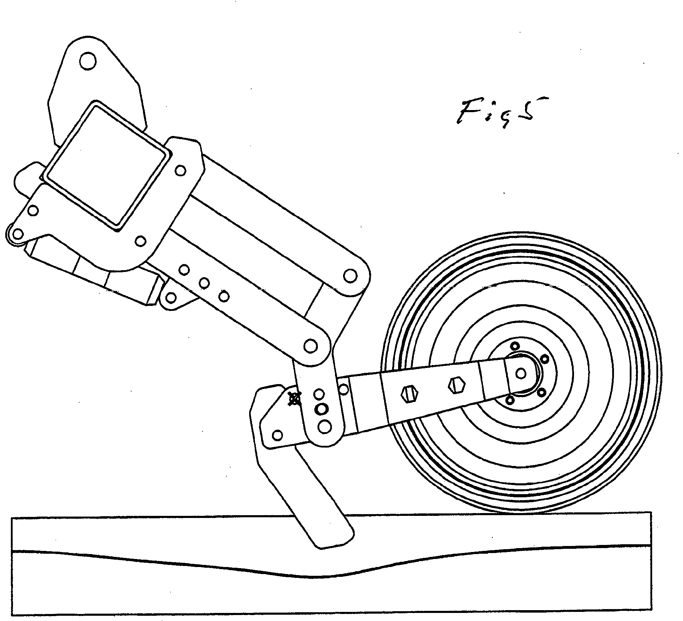

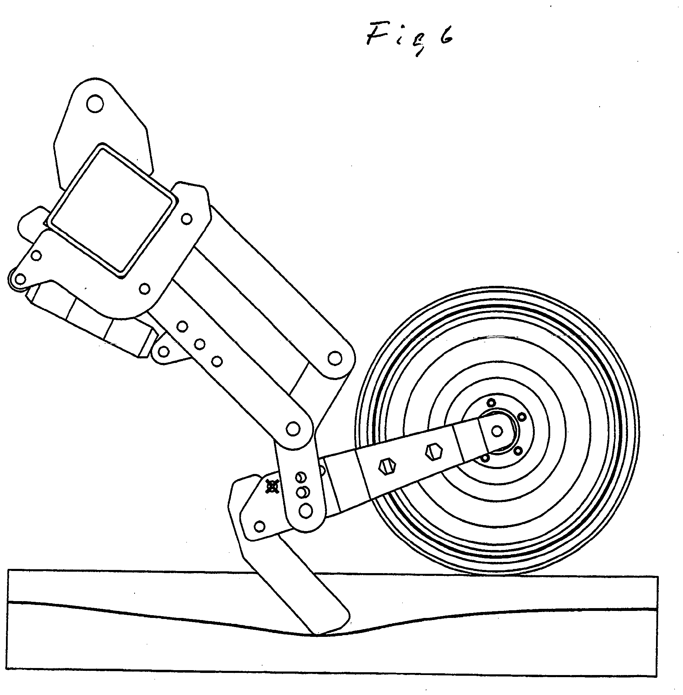

Moveable downwards, locked upwards Fig. 5, 6 (pin in the front position hole 12).

The turning of the beam 8 limits the movement of the tool to a minimum depth, that is the tool
can follow the sow bottom downwards but is prevented from going more shallow than the adjustment corresponding to the contact of the extension with the pin. Pressure is adjusted with the height of the frame, Fig. 5 shows the upper limit position with present angle of the beam 8 and Fig. 6 a deeper position.

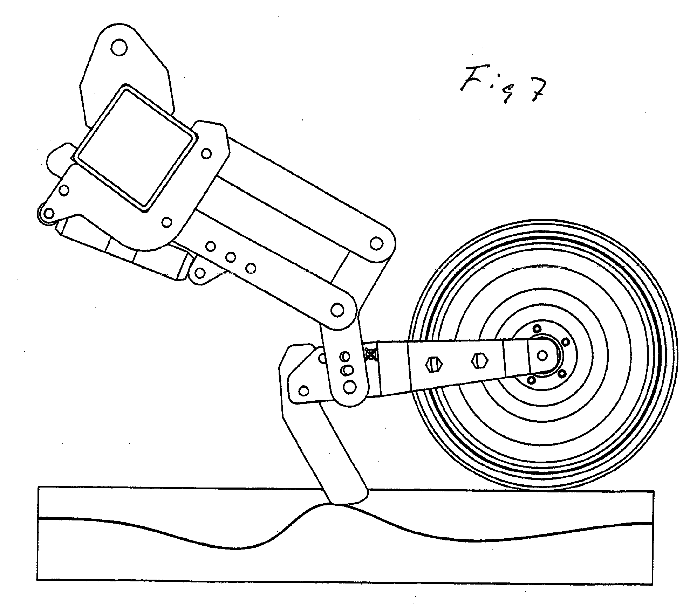

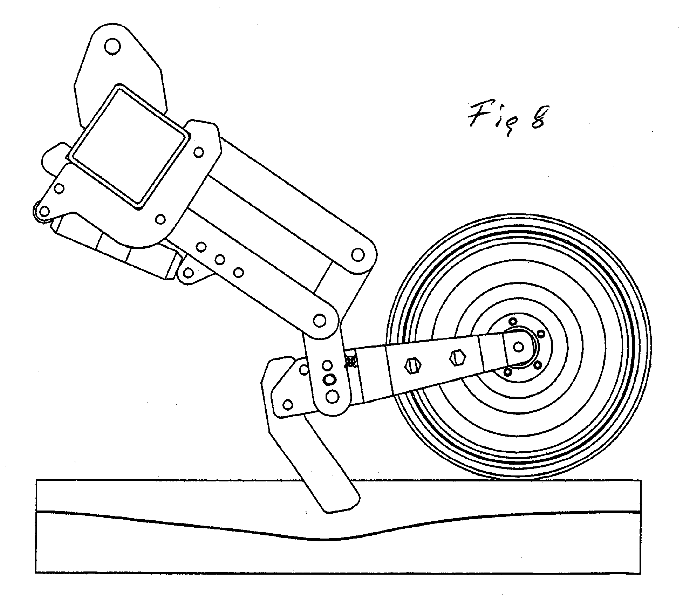

Moveable upwards, locked downwards Fig. 7 and 8 (pin in rear position hole 13). The turning of the beam limits the tool to a maximum depth, that is the tool can follow the sow bottom upwards but is locked against going deeper than the adjustment, that is what the pin will allow before the wheel prevent continued lowering. Fig. 7 shows a high position for the tool and fig. 8 the lowermost position with the present angle of the beam 8. Pressure is adjusted with the level of the frame.

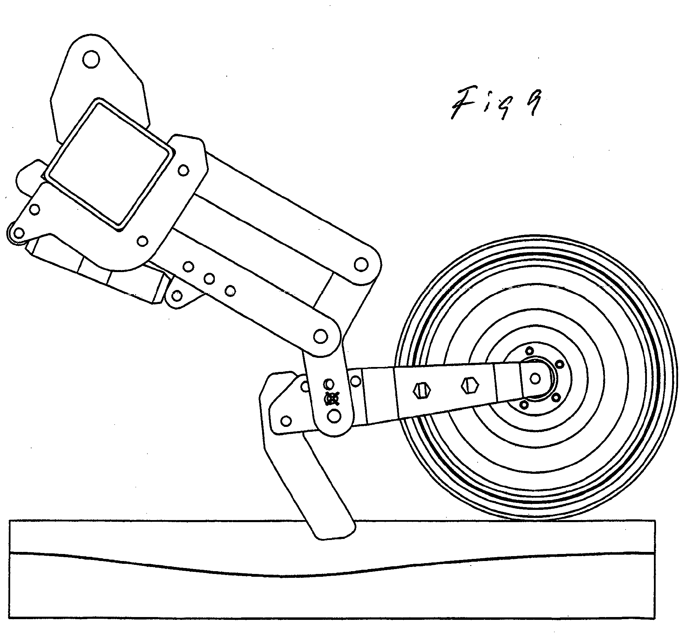

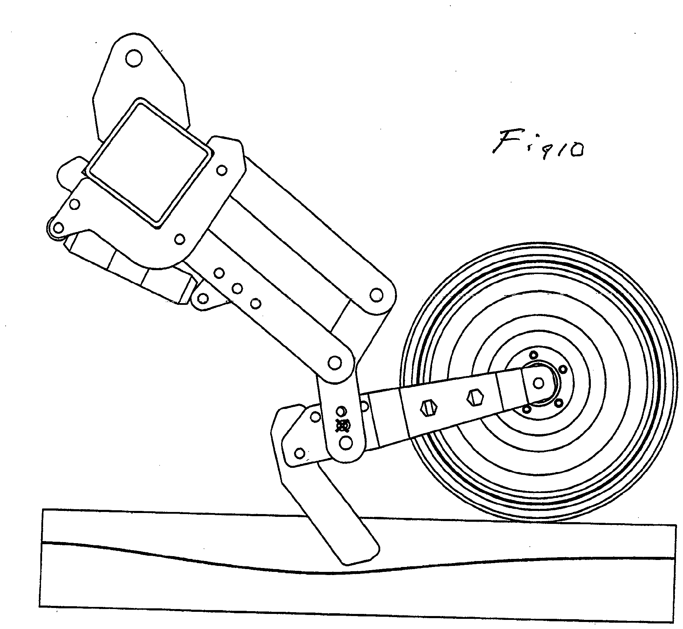

Moveable upwards and downwards but limited movement (pins on both sides with a play or for instance in the middle with an elongated hole 14 Fig. 9, 10). The turning of the beam 8 adjust a position were the tool has a movable area, that is both a minimum and a maximum depth and the area there between. Pressure is adjusted with the height of the frame. Fig. 9 shows the highest position of the tool with the present angle of the beam 8 and Fig. 10 the lowermost position.

It is possible to have more holes that provide a play that is different upwards or downwards depending of if you want to define an area where the tool may be moveable but still have a minimum and a maximum position.

Advantageously the pins may be replaced with adjustable stops that make all adjustments entirely stepless.

The device allows different types of tools to be used and different strategies can be used depending on the present conditions. The present machines of the day are each built for one strategy with different advantages and disadvantages. The farmer choose strategy and type of preparatory work depending of the type of sow machine that he is going to use and when he byes a sow machine he restrict himself to a given strategy. At a sowing machine according to the invention he can switch between the strategies. Some machines are provided with plate coulters and the depth is limited by means of the wheel by locking the relation between coulter and wheel. This is often a good method that reduce the dependency on preparatory work. It may however in some circumstances be good to be able to follow a sow bottom, for instance when a bad structure in the soil result in dry soil lying on top of an uneven sow bottom that partly is very deep down. At these conditions a trailing coulter may be preferred in combination with a moveable position for the holder resulting in the coulter being pushed by spring force (or hydraulic cylinder, etcetera), against the sow bottom and follows this. It may also be good to be able to restrict the coulter so that it can not go to shallow or too deep since too shallow sowing may provide a too dry environment for the seeds or that they freeze up while a too deep sowing may result in the plant being unable to make it all the way up while a too deep sowing also can result in less shots per seed.

The device can be modified further so that the divided holder can be turned to obtain the possibility to have the wheel behind or in front of the tool or coulter. This may for instance be achieved with a retractable axle pin in the journalling between the arm 1 and the extension 5.

## Claims

1. Device for agricultural machines that includes a unit with a tool (2) working in the ground and a holder or bracket (5) for this as well as a wheel (3) rolling in the working path of the tool, wherein the unit of tool and wheel are pivotably or turnably journalled in a holder or bracket (5) around an axle (4) that is perpendicular to the movement direction of the tool, **characterised in that** there are several stops for limiting the pivoting movement of the unit in relation to the holder or bracket (5) by locked, unlocked or limited adjustment of the pivot movement in one and/or the other direction and that the stops are moveable or fixable or adjustable to different positions.

2. Device according to claim 1, **characterized in that** the stops are moveable, fixable or adjustable in different positions.

3. Device according to claim 1 or 2, **characterized in that** the stops consist of different holes (11, 12, 13) and in these insertable pins (10).

4. Device according to any of the preceding claims, **characterized in that** two stops for opposed directions can be placed so close to each other that the position will be essentially unchangeable.

5. Device according to any of the preceding claims, **characterized in that** the tool and wheel respectively can change place or that the unit that carry theses can be turned so that the wheel either comes before the tool when work is done or after the tool.

6. Device according to any of the preceding claims, **characterized in that** the unit of tool, wheel and a connecting arm (1) is connected with the machine via a parallelogram that is articulated in the corners.

## Patentansprüche

1. Vorrichtung für landwirtschaftliche Maschinen, aufweisend ein Werkzeug (2), das im Boden arbeitet und einen Halter oder eine Klammer (5) hierfür sowie ein Rad (3), das auf dem Arbeitsweg des Werkzeugs (2) rollt, wobei die Einheit aus Werkzeug (2) und Rad (3) schwenkbar oder drehbar in dem Halter oder in der Klammer (5) um eine Achse (4) gelagert ist, die senkrecht zur Bewegungsrichtung des Werkzeugs (2) ist, **dadurch gekennzeichnet, dass** eine Anzahl Anschläge zur Begrenzung der Schwenkbewegung der Einheit relativ zu dem Halter oder der Klammer (5) vorgesehen sind, in denen die Schwenkbewegung in einer und/oder der anderen Richtung gesperrt, entsperrt oder begrenzt eingestellt wird und dass die Anschläge bewegbar, fixierbar oder in verschiedene Positionen einstellbar sind.

2. Vorrichtung nach Anspruch 1, **dadurch gekennzeichnet, dass** die Anschläge bewegbar, fixierbar oder in verschiedene Positionen einstellbar sind.

3. Vorrichtung nach einem der Ansprüche 1 oder 2, **dadurch gekennzeichnet, dass** sich die Anschläge aus verschiedenen Löchern (11, 12, 13) und aus in die Löcher (11, 12, 13) einsetzbaren Stiften (10) zusammensetzen.

4. Vorrichtung nach einem der vorhergehenden Ansprüche, **dadurch gekennzeichnet, dass** zwei Anschläge für zwei entgegengesetzte Richtungen derart nahe zueinander positioniert werden können, dass die Position im Wesentlichen unveränderbar wird.

5. Vorrichtung nach einem der vorhergehenden Ansprüche, **dadurch gekennzeichnet, dass** das Werkzeug (2) und das Rad (3) jeweils den Platz wechseln können oder dass die Einheit, die das Werkzeug (2) und das Rad (3) trägt, derart gedreht werden kann, dass das Rad (3) entweder vor dem Werkzeug (2) liegt, wenn Arbeit verrichtet wird oder hinter dem Werkzeug (2).

6. Vorrichtung nach einem der vorhergehenden Ansprüche, **dadurch gekennzeichnet, dass** die Einheit aus Werkzeug (2), Rad (3) und einem Verbindungsarm (1) über ein in seinen Ecken gelenkiges Parallelogramm mit der Maschine verbunden ist.

## Revendications

1. Dispositif destiné à des machines agricoles comprenant une unité avec un outil (2) travaillant dans le sol, et un support ou un étrier de montage (5) pour celui-ci ainsi qu'une roue (3) roulant dans le trajet de travail de l'outil, dans lequel l'unité d'outil et la roue sont montées de manière pivotante ou tournante dans un support ou étrier de montage (5) autour d'un axe (4) perpendiculaire à la direction de déplacement de l'outil, **caractérisé par**
plusieurs butées pour limiter le mouvement de pivotement de l'unité par rapport au support ou à l'étrier de montage (5) par un ajustement verrouillé, déverrouillé ou limité du mouvement de pivotement dans l'une et/ou l'autre direction, et en ce que les butées sont mobiles ou fixables ou ajustables à différentes positions.

2. Dispositif selon la revendication 1, **caractérisé en ce que** les butées sont mobiles, fixables ou ajustables dans différentes positions.

3. Dispositif selon la revendication 1 ou 2, **caractérisé en ce que** les butées sont constituées de différents trous (11, 12, 13) et de broches (10) pouvant être insérées dans ceux-ci.

4. Dispositif selon l'une quelconque des revendications précédentes, **caractérisé en ce que** deux butées pour des directions opposées peuvent être placées si près l'une de l'autre que la position sera sensiblement immuable.

5. Dispositif selon l'une quelconque des revendications précédentes, **caractérisé en ce que** l'outil et la roue peuvent respectivement changer de place, ou **en ce que** l'unité qui les porte peut être tournée de sorte que la roue soit avant l'outil lorsque le travail est effectué, ou après l'outil.

6. Dispositif selon l'une quelconque des revendications précédentes, **caractérisé en ce que** l'unité d'outil, la roue et un bras de liaison (1) sont reliés à la machine par l'intermédiaire d'un parallélogramme qui est articulé dans les coins.
